# EUROPEAN PATENT SPECIFICATION

(11) **EP 3 425 781 B1**
(45) Date of publication and mention of the grant of the patent: **19.06.2024**
(21) Application number: 17180404.0
(22) Date of filing: 08.07.2017
(51) Int. Cl.: H02K 49/10, H02K 1/276, H02K 7/06

(54) **MOTOR USING PERMANENT MAGNETS WITH MOVABLE STATOR, CONTROLLED BY LINEAR ACTUATORS**
MOTOR MIT VERWENDUNG VON PERMANENTMAGNETEN MIT BEWEGLICHEM STATOR, GESTEUERT DURCH LINEARANTRIEBE
MOTEUR UTILISANT DES AIMANTS PERMANENTS AVEC STATOR MOBILE COMMANDÉ PAR DES ACTIONNEURS LINÉAIRES

(43) Date of publication of application: 09.01.2019
(73) Proprietor: Ocwieja, Agnieszka, 60-184 Poznan (PL)
(72) Inventor: Ocwieja, Agnieszka, 60-184 Poznan (PL)
(74) Representative: Sawicki, Igor

(56) References cited:
- WO-A1-2009/127123
- CA-A- 882 881
- JP-A- S60 167 677
- US-A1- 2009 134 731
- US-A1- 2012 062 048

## Description

The present invention relates to a motor comprising permanent magnets with movable stator, controlled by linear actuators.

From the description of the patent PL 224308, there is known a design of a synchronous motor in which permanent magnets are mounted on the rotor inside a stator fitted with permanent electromagnets with ferromagnetic cores. The electromagnetic field generated by the coils in the of the stator acts on the magnetic field of the rotor permanent magnets.

From the description of the patent PL 207450, there is known a design of a two-pole synchronous motor with permanent magnets in which the permanent magnets are mounted on the motor rotor forming a V shape. The stator has electromagnets mounted in it and generating electromagnetic field acting on the magnetic field of the permanent magnets in the rotor.

From the description of the patent US 4751486, there is known a design of a motor in which the rotor is fitted with two rows of permanent magnets, mounted parallel to each other. The stator is fitted with pairs of permanent electromagnets generating opposite electromagnetic fields.

In another design known according to the patent description US 5594289, permanent magnets are arranged on the motor rotor in such a manner that they make a tilted structure thereby producing a curved magnetic field. The stator is fitted with permanent electromagnets generating an electromagnetic field acting on the magnetic field of the permanent magnets in the rotor.

All the descriptions referred to above are characterised by the presence of permanent magnets in different forms of arrangement on the motor rotor while the stator is fitted with different types of permanent electromagnets generating electromagnetic field. These designs are devoid of permanent magnets in the stator, which significantly increases the amount of energy necessary for the operation of the said devices.

From the description of the patent US 4151431, there is also known a design of a permanent magnet device in which the inner part of the device is made of the stator, while the outer part of the motor is made of the rotor. On the surface of the stator, there are provided arranged permanent magnets where the distances between them are not equal and the magnets are mounted in such a manner that they are oriented with the same pole towards the permanent magnets of the rotor. In the structure of the rotor, there are mounted crescent-shaped permanent magnets where both poles of the rotor magnets are oriented towards the stator magnets. This device does not comprise any electromagnetic coils and the alleged motor operation itself is hypothetical.

Another known solution, described in patent applications WO2012173757 and US2013134713, concerns a turbine generator driven by compressed air and magnet motor. In this solution, permanent magnets on the of the stator and the permanent magnets on the rotor have the same poles, which causes the stator magnet pole to act on the rotor magnet pole and repels it. The effect is that the magnetic fields of the stator permanent magnets generate a magnetic circle as the fields of the neighbouring permanent magnets are fields of the same poles, which consequently prevents generation of torque on the rotor.

It is also known from patent description JPS60167677 a motor equipped with permanent magnets on a rotor and a stator, where all permanent magnets have poles compatible, and torque being obtained by bringing permanent stator magnets by means of individual pneumatic actuators to the rotor magnets.

It is also known from patent description US2009134731 a synchronous motor having a multipolar cylindrical magnet on the rotor, improved by introducing ferromagnetic poles in its structure. Magnets only appear on the rotor. The motor uses electromagnetic interactions between the stator coils and the rotor magnet.

The purpose of the invention is to present a design of a motor using permanent magnets having a movable stator that would be characterised by high output power with reduced requirement for the energy necessary for motor operation (movements of the stator).

The present invention relates to a motor comprising a rotor (1), where:
- the rotor (1) comprising at least two discs made of a diamagnetic material and mounted on a drive shaft (16),
- the motor further comprising permanent magnets (7) embedded in sockets in each of the at least two discs, wherein the poles of same polarity N or S of the permanent magnets (7) are located on the outer circumference of the rotor, so that the successive poles of the permanent magnets (7) of the rotor (1) have the same polarity,
- and wherein the permanent magnets (7) in each of the at least two discs are arranged successively and shifted by a certain angle in the circumferential direction from the permanent magnets in the other disc or discs,
- the motor further comprising a movable stator (2),
- the movable stator (2) comprising a stationary frame (3) and two crescents that are half-ring shaped and radially surround the rotor (1) and are mounted to the stationary frame (3) by means of a pendulous connection (13),
- the crescents being controlled by means of linear actuators (5) attached to the frame (3), the linear actuators (5) being supplied with electric current, so that the crescents of the stator (2) are positioned closer to or further away from the rotor (1) by means of the linear actuators (3),
- wherein the frame (3) of the motor has a spacer beam (6) for positioning the crescents of the stator (2) and preventing them from coming too close to the rotor,
- the movable stator (2) further comprising permanent magnets (8) embedded in sockets made of a diamagnetic material inside the crescents, in such manner that pairs of permanent magnets (8) of alternating polarisation are arranged in the inner circumference of the stator, the distance between each permanent magnet (8) in the pair of permanent magnets (8) being placed at a distance in the circumferential direction, preferably 17 mm, that is significatively smaller than the distance, preferably 165 mm, between a pair of permanent magnets (8) and a circumferentially adjacent pair of permanent magnets (8),
- wherein the sockets located in the rotor (1) and the stator (2) respectively comprise ferromagnetic cores (9),
- wherein the successive permanent magnets (8) of the stator (2) are partially covered with a strip (10) of a ferromagnetic material on the side of the rotor.

Embodiments of the object of the invention have been shown and discussed in the drawings presenting cross sections of the motor and its constituent parts.

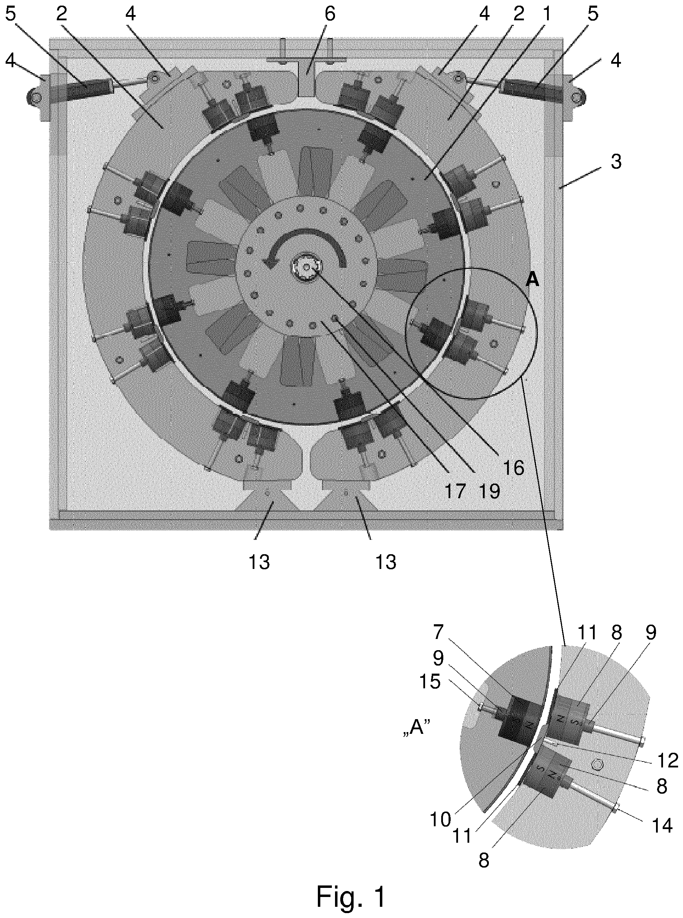

Fig. 1 presents the cross section of the motor in the first embodiment. The motor is constructed of a movable rotor 1 and a stator 2. The stator 2 comprises crescents that are embedded by means of bearings in the stationary motor frame 3. In the upper part, the crescents of the stator 2 are attached through movable fixings 4 with the frame 3 by means of linear actuators 5 supplied with electric current at 24V. The movable stator 2 is prevented from coming too close to the rotor 1 by a spacer beam 6, which at the same times aligns the entire arrangement.

In the rotor 1 and the stator 2, there are fixed permanent magnets, 7 and 8, respectively, embedded in sockets made of a diamagnetic material, which is a polyamide (Kaprolan) or plywood. The application of plywood had an advantageous effect on the lifetime and the strength of the permanent magnets. The sockets located in the rotor 1 and the stator 2 respectively have ferromagnetic cores 9.

In the movable stator 2 there are embedded sixty four (64) permanent magnets 8 in such manner that the poles of the permanent magnets 8 are on the inner circumference of the stator 2.

The successive permanent magnets 8 of the stator 2 with poles S and N in the direction of the rotation of the rotor 1 are partially covered with a strip 10 of a ferromagnetic material on the side of the rotor. In the embodiment, the strip 10 used has a thickness of 10 mm, width of 50 mm and a length of approximately the length of the stator 2. Above the sixty four permanent magnets 8 of the stator 2 there are fixed eight strips 10. Additionally, above the permanent magnets 8 of the stator 2 there is a mounting strip 11 of a diamagnetic material, which helps hold the permanent magnet 8 in the socket of the stator 2, which has been shown in the enlarged section A.

The strip 10 is attached to the stator by means of screws 12.

In the bottom part the crescents are mounted pendulously to the stator frame by means of the elements 13.

The rings of a ferromagnetic material 9 are mounted by means of the screws 14 and 15.

The rotor 1 comprises four discs made of a diamagnetic material, in which discs, in milled sockets, there are embedded permanent magnets 7 in such manner that all have the same pole on the side of the motor stator 2. In the case of the motor concerned, this is the N pole. Each of the rotor discs is provided with eight permanent magnets 7 of this type placed in such manner that the planes of the permanent magnets 7 being the N pole are on the circumference of the rotor 1. Thus, there are created eight assemblies of permanent magnets 7 arranged successively. One assembly of permanent magnets 7 consists of four independent permanent magnets 7 arranged successively and shifted by a certain angle from each other. The permanent magnets 7 are arranged in two or more longitudinal lines on the rotor 1. Such arrangement of the permanent magnets 7 of the rotor 1 causes that in a given moment each of the permanent magnets 7 of the rotor 1 is acted on by different forces of the magnetic fields of the permanent magnets 8 of the stator 2, which consequently causes throwing the arrangement out of balance and setting the rotor 1 in rotary motion.

The discs of the rotor 1 are mounted on the drive shaft 16 and connected with each other and at the same time with the shaft 16 by means of a positioning disc 17, a spacer bushing 18 and pins 19.

The discs of the rotor 1 are connected with the permanent magnets 7 in such manner that the successive permanent magnets 7 of the rotor 1 interacting with the permanent magnets 8 of the stator 2 are shifted from each other by 11.25°.

As a consequence of positioning the crescents of the stator 2 closer to or further away from the rotor 1 by means of the linear actuators 3, the magnetic fields of the permanent magnets 8 of the stator 2 act on the fields of the permanent magnets 7 of the rotor 1 setting it in directional rotary motion.

The operation of the motor in the embodiment where the rotor 1 consists of four discs to each of which eight permanent magnets 7 are attached has been presented in Fig. 2, Figures 3a, 3b, 3c, 3d as well as Fig. 4 and Figures 5a, 5b, 5c, 5d.

Fig. 2 presents the motor in front view, in oblique projection, and in a side view with marked sections B₁-B₁, B₂-B₂, B₃-B₃, B₄-B₄, where the position of the permanent magnets 7 of each of the discs of the rotor 1 relative to the permanent magnets 8 of the stator 2 is the most advantageous for the motor output.

Figures 3a, 3b, 3c, 3d present the operation principle of the motor in the position of the permanent magnets 7 of each of the discs of the rotor 1 relative to the permanent magnets 8 of the stator 2 that is the most advantageous for the motor output.

Motor using permanent magnets has a movable stator controlled by linear actuators according to the present invention.

The permanent magnets 7 of the rotor 1 and the permanent magnets 8 of the stator 2 have opposite poles (N-S or S-N) or the same (N-N or S-S). Permanent magnets 8 of the stator 2 are mounted in such manner that the successive permanent magnets in the direction of the rotor 1 rotation have alternately poles S and N in the inner circumference of the stator 2. The distance between the permanent magnets 8 mounted in the stator 2 with poles S and N in the direction of the rotor 1 rotation is significantly smaller than the distance between the successive permanent magnets of the stator with poles N and S. In the motor being described according to the present invention, the distance between the permanent magnets 8 having poles S and N in the direction of the rotor 1 rotation is 17mm, and the distance between the permanent magnets 8 of the stator 2 N and S in the direction of the rotor 1 rotation is 165 mm.

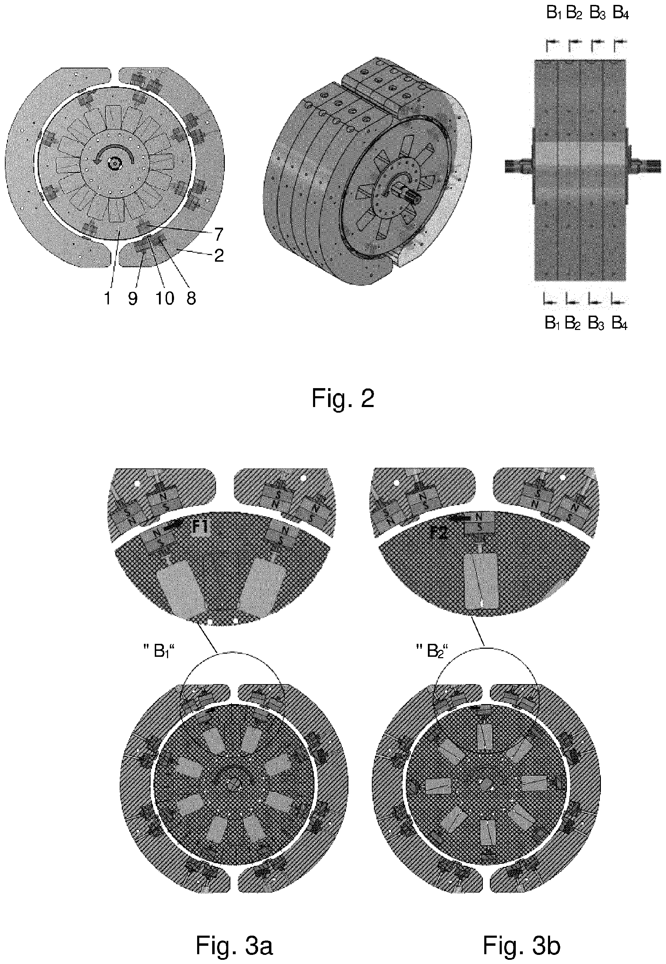

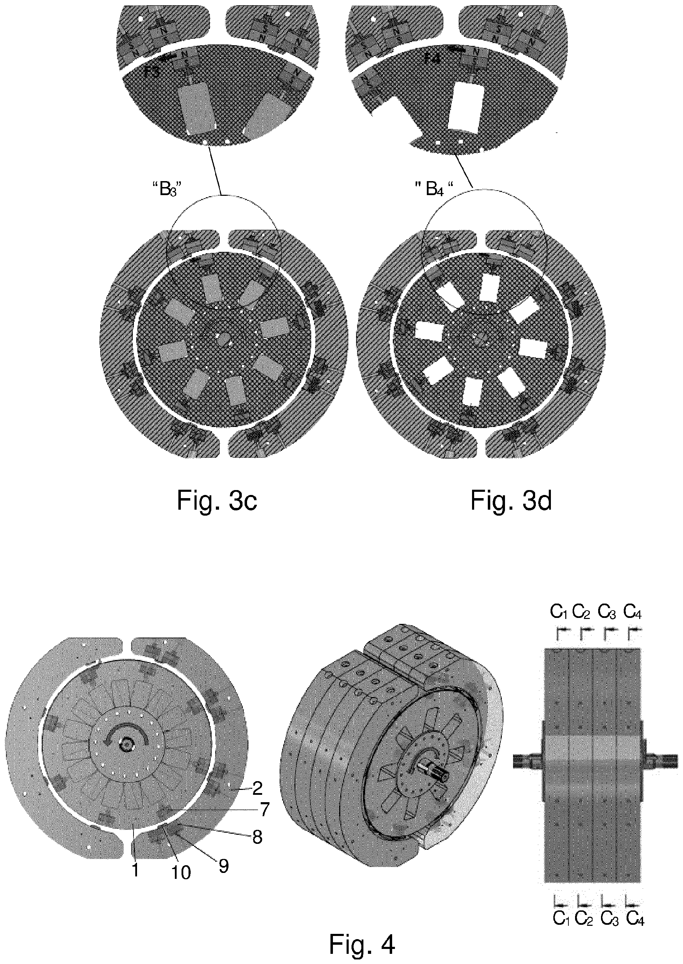

Fig. 3a presenting section B₁-B₁ (the first zone / disc) shows a permanent magnet 7 of the rotor 1 with pole N acting with two permanent magnets 8 of the stator 2 with poles S and N in the direction rotor 1 rotation. The strip 10 of a ferromagnetic material, which partly covers both of the permanent magnets 8 of the stator 2 on the side of the rotor 1, forms together with the permanent magnets 8 of the stator 2 a specific magnetic yoke with a flattened magnetic field. The poles S and N of the permanent magnets 8 of the stator 2, which form a magnetic yoke together with the ferromagnetic material 10, act simultaneously on the N pole of the permanent magnet 7 of the rotor 1 in such manner that the S pole of the magnet 8 of the stator 2 attracts the permanent magnet 7 of the rotor 1 in the direction opposite to the movement of the rotor 1 while the N pole of the magnet 8 of the stator 2 repels the permanent magnet 7 of the rotor 1 having the same pole in the direction opposite to the rotation of the rotor 1.

Fig. 3b presenting section B₂-B₂ section (the second zone / disc) shows the permanent magnet 7 of the rotor 1 with N pole acting with the permanent magnets 8 of the stator 2 with poles N and S in the direction of the rotation of the rotor 1. The permanent magnet 8 of the stator 2 with pole N repels the permanent magnet 7 of the rotor 1 with pole N in the direction coincident with that of the rotor 1 while the permanent magnet 8 of the stator 2 with pole S attracts the permanent magnet 7 of the rotor 1 with N pole in the direction coincident with the rotation of the rotor 1.

Fig. 3c presenting section B₃-B₃ (the third zone / disc) shows the position of the permanent magnets 7 of the rotor 1 with pole N in the magnetic action zone of the permanent magnet 8 of the stator 2 with pole S. The permanent magnet 8 of the stator 2 with pole S attracts the permanent magnet 7 of the rotor 1 with pole N in the direction coincident with the rotation of the rotor 1.

Fig. 3c presenting section B₄-B₄ (the fourth zone / disc) shows the permanent magnet 7 of the rotor 1 with pole N in the magnetic action zone of the permanent magnet 8 of the stator 2 with pole N. The permanent magnet 8 of the stator 2 with pole N repels the magnet of the rotor o with pole N in the direction coincident with the rotation of the rotor 1.

Fig. 4 presents the motor in front view, in oblique projection, and in a side view with marked sections C₁-C₁, C₂-C₂, C₃-C₃, C₄-C₄, where the position of the permanent magnets 7 of each of the discs of the rotor 1 relative to the permanent magnets 8 of the stator 2 is the least advantageous for the motor output.

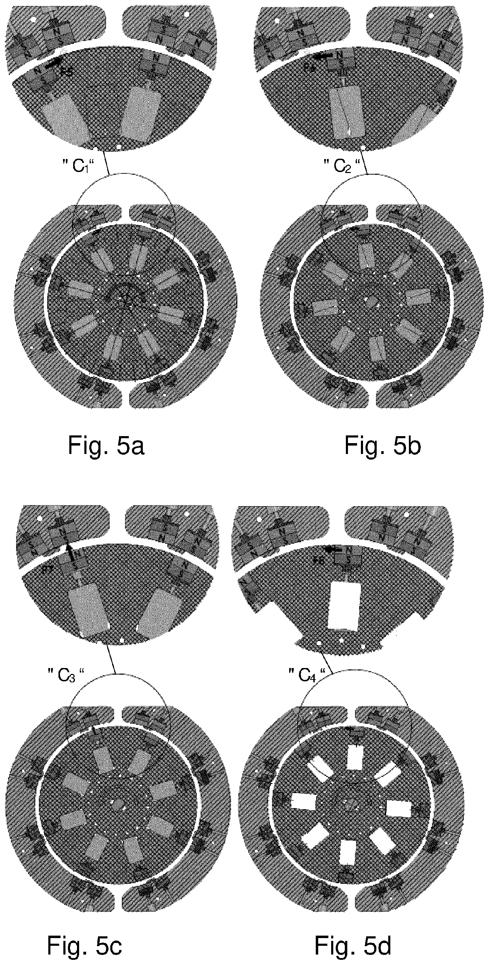

Figures 5a, 5b, 5c, 5d present the operation principle of the motor in the position of the permanent magnets 7 of each of the discs of the rotor 1 relative to the permanent magnets 8 of the stator 2 that is the least advantageous for the motor output.

Fig. 5a presenting section C₁-C₁ (the first zone / disc) shows the permanent magnet 7 of the rotor 1 with pole N interacting with the magnet 8 of the stator 2 with pole S and the magnet 8 of the stator 2 with pole N in the direction of the rotation of the rotor 1. The strip 10 of a ferromagnetic material, which partly covers both of the permanent magnets 8 of the stator 2 on the side of the rotor 1, forms together with the permanent magnets 8 of the stator 2 a specific magnetic yoke with a flattened magnetic field. The permanent magnets 8 of the stator 2 with poles S and N in the direction of the rotation of the rotor 1, which form a specific magnetic yoke, act on the N pole of the permanent magnet 7 of the rotor 1 in such manner that the S pole of the magnet 8 of the stator 2 attracts the permanent magnet 7 of the rotor 1 in the direction opposite to the rotation of the rotor 1 while the next permanent magnet of the stator 2 with pole N acts on the magnet of the rotor 1 with pole N in such manner that it repels it in the direction opposite to the rotation of the rotor 1.

Fig. 5b presenting section C₂-C₂ (the second zone / disc) shows the permanent magnet 7 of the rotor 1 with pole N interacting with the magnet 8 of the stator 2 with pole S. The permanent magnet 8 of the stator 2 with pole S attracts the permanent magnet 7 of the rotor 1 with pole N in the direction coincident with the rotation of the rotor 1.

Fig. 5c presenting section C₃-C₃ (the third zone / disc) shows the permanent magnet 7 of the rotor 1 with pole N interacting with the magnet 8 of the stator 2 with pole S where the centres of the permanent magnets 8 of the stator 2 and of the rotor 1 are in the same axis. The permanent magnet 8 of the stator 2 with pole S attracts the permanent magnet 7 of the rotor 1 with pole N in the direction coincident with the axis of magnetization of the both permanent magnets 7 and 8. In this situation, the direction of action of the force of attraction is perpendicular to the tangent at the point of application located on the surface of the magnet 7 of the rotor 1 with pole N. In such arrangement, this force does not affect the rotational movement of the rotor 1.

Fig. 5d presenting section C₄-C₄ (the fourth zone / disc) shows the permanent magnet 7 of the rotor 1 with pole N interacting with the magnet 8 of the stator 2 with pole N. The permanent magnet 8 of the stator 2 with pole N repels the permanent magnet 7 of the rotor 1 with pole N in the direction coincident with the rotation of the rotor 1.

The other possible positions of the permanent magnets 7 of the rotor 1 relative to the position of the permanent magnets 8 of the stator 2 are intermediate positions between the ones presented in the above descriptions and figures, which are the extreme positions (the positions that are the most advantageous and the least advantageous for the motor output).

The measurements made revealed the following values of forces that act on the permanent magnet 7 of the rotor 1 at the point of application located on the surface of the magnet 7 of the rotor 1 in its geometric centre:
1) in the situation of the most advantageous, for the motor output, position of the permanent magnets 7 of each of the discs of the rotor 1 relative to the permanent magnets 8 of the stator 2:
   - section B₁-B₁: value of the force F1 = 150 N, direction coincident with, and sense opposite to the rotation of the rotor
   - section B₂-B₂: value of the force F2 = 70 N, direction and sense coincident with the rotation of the rotor
   - section B₃-B₃: value of the force F3 = 100N, direction and sense coincident with the rotation of the rotor
   - section B₄-B₄: value of the force F4 = 100N, direction and sense coincident with the rotation of the rotor
2) in the situation of the least advantageous, for the motor output, position of the permanent magnets 7 of each of the discs of the rotor 1 relative to the permanent magnets 8 of the stator 2:
   - section C₁-C₁: value of the force F5 = 110N, direction coincident with, and sense opposite to the rotation of the rotor
   - section C₂-C₂: value of the force F6 = 100N, direction and sense coincident with the rotation of the rotor
   - section C₃-C₃: value of the force F7 = 0N, direction and sense coincident with the rotation of the rotor
   - section C₄-C₄: value of the force F8 = 100N, direction and sense coincident with the rotation of the rotor

In the embodiment of the invention presented herein, the discs of the rotor 1 with the permanent magnets 7 are connected with each other in such manner that the successive permanent magnets 7 of the rotor 1 interacting with permanent magnets 8 of the stator 2 are shifted from each other by 5.625°. As a consequence of positioning the crescents of the stator 2 closer to the rotor 1 the magnetic fields of the permanent magnets 8 of the stator 2 act on the fields of the permanent magnets 7 of the rotor 1 setting it in directional rotary motion.

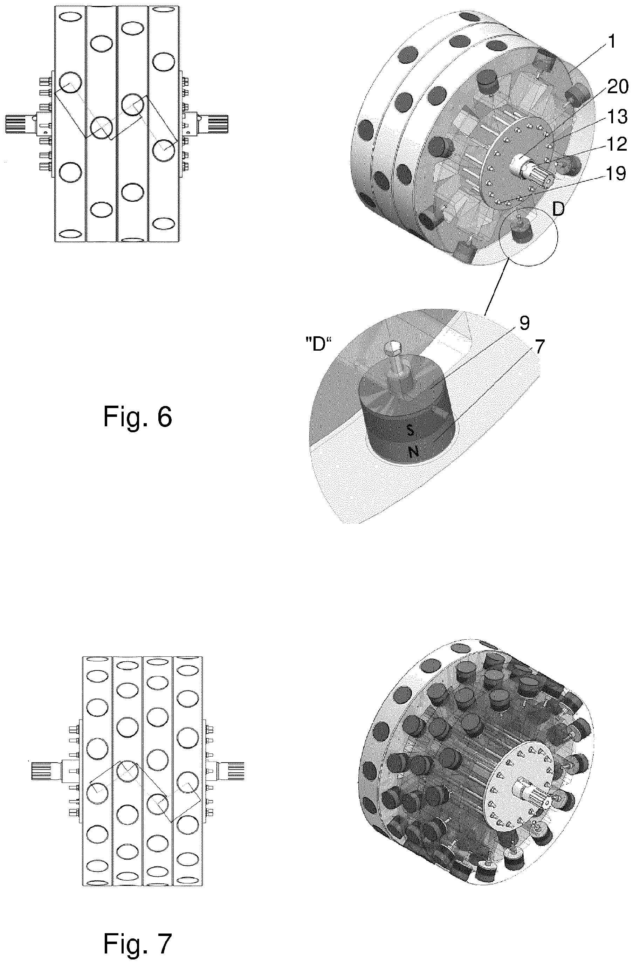

Fig. 6 presents the rotor of the motor in the embodiment with four discs, each disc having eight permanent magnets 7 in it, in a side view and in axonometric projection together with enlarged section D showing a single permanent magnet 7, while Fig. 7 in the embodiment with four discs, each disc having sixteen permanent magnets 7 in it.

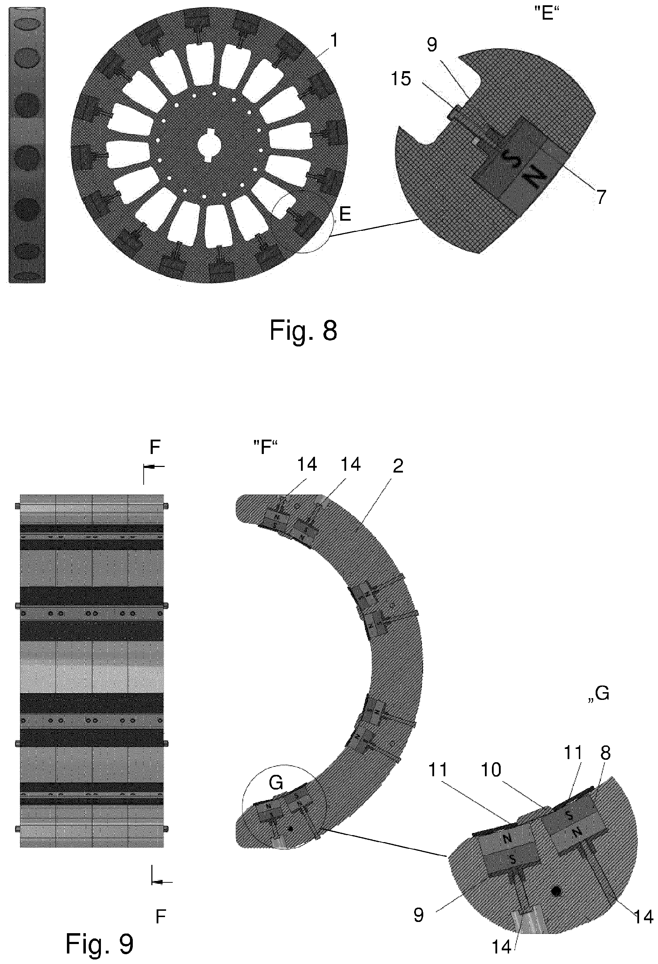

Fig. 8 presents view of a single disc of the rotor 1 with enlarged section E showing a single permanent magnet 7.

Fig. 9 presents side view (on the inside) and section of a single crescent of the stator 2 with enlarged section G showing a pair of permanent magnets 8.

In another variant design of the motor concerned, the same moment of force is achieved by providing the rotor 1 with two discs with the double number of permanent magnets 7. Each of the two rings of the rotor 1 has sixteen permanent magnets 7, i.e. as a whole, the rotor 1 has thirty-two permanent magnets 7.

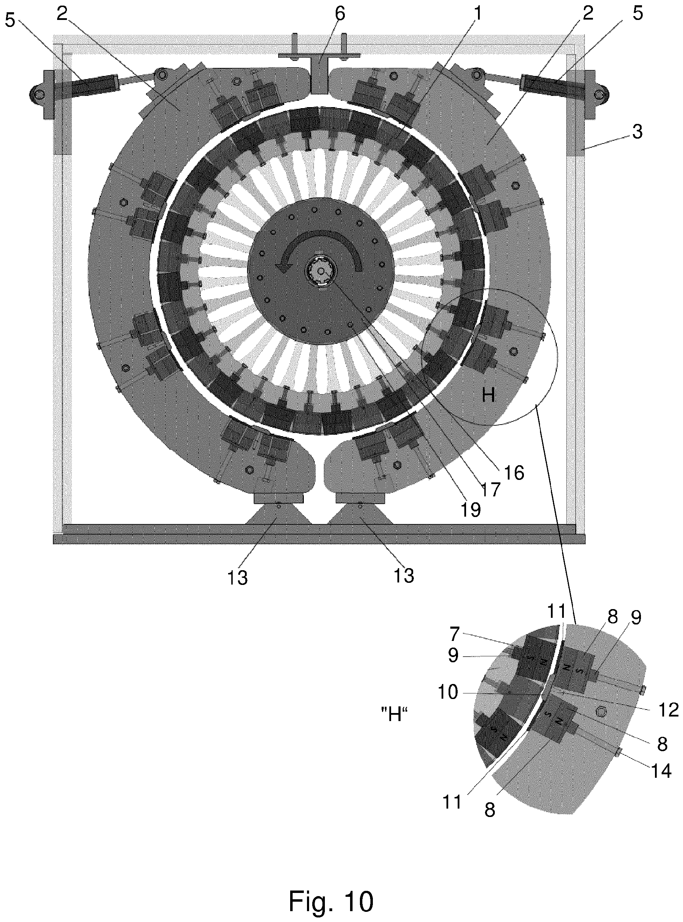

This solution is presented in Fig. 10 showing the cross section of the motor together with an enlarged section showing the reciprocal positioning of the permanent magnets 7 of the rotor 1 and the permanent magnets 8 of the stator 2.

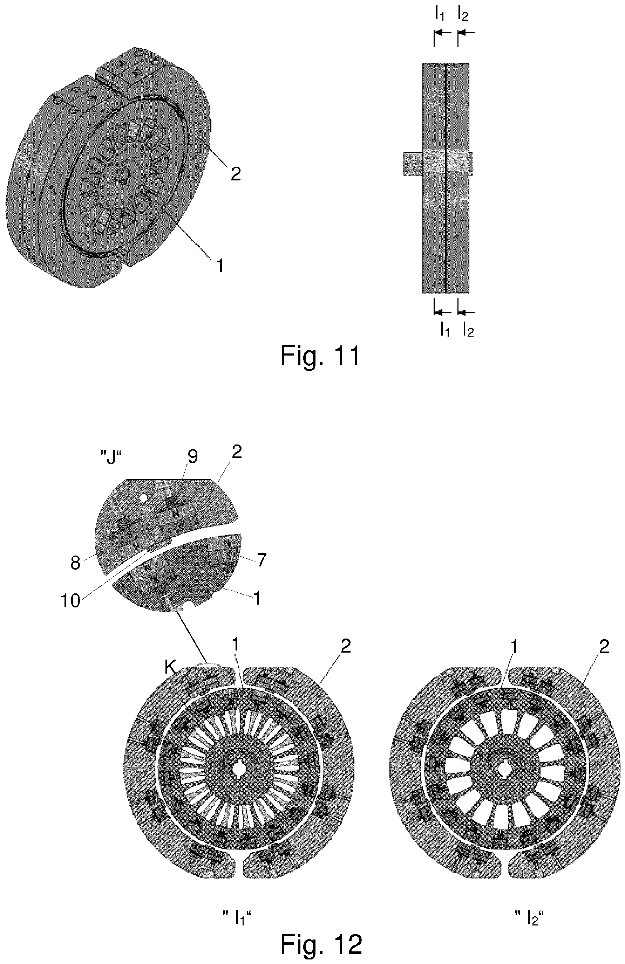

Fig. 11 presents juxtaposition of the stator 2 and the rotor 1 in axonometric projection and in a side view the marked sections I₁-I₁, I₂-I₂. The permanent magnets 7 embedded in the rotor 1 of the motor have the same pole N on the side of the stator 2, where the permanent magnets 7 of the first ring of the rotor 1 are shifted relative to the permanent magnets 7 of the other ring of the rotor 1 by an angle of 22.5°.

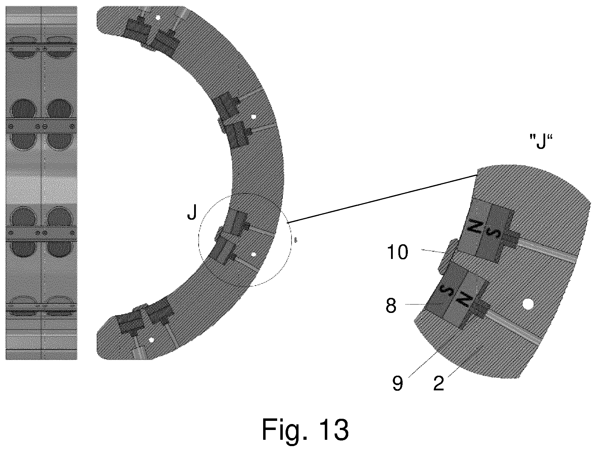

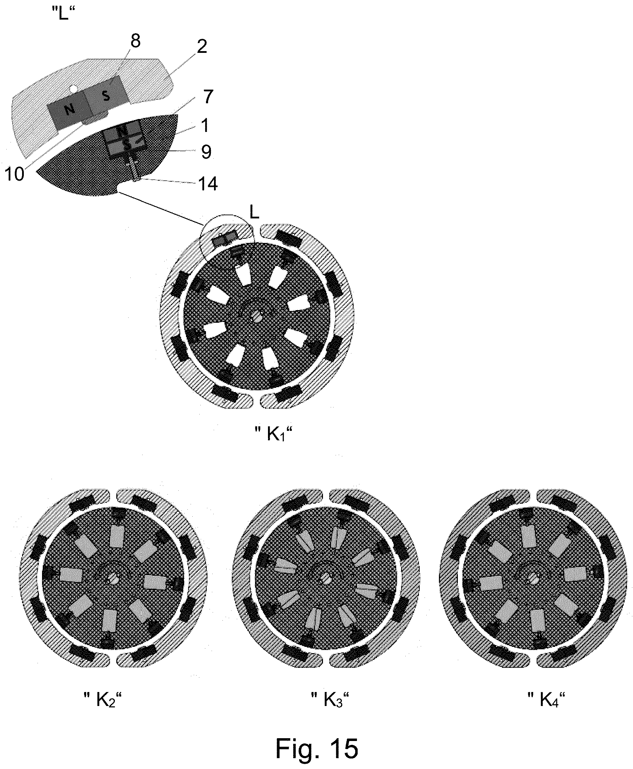

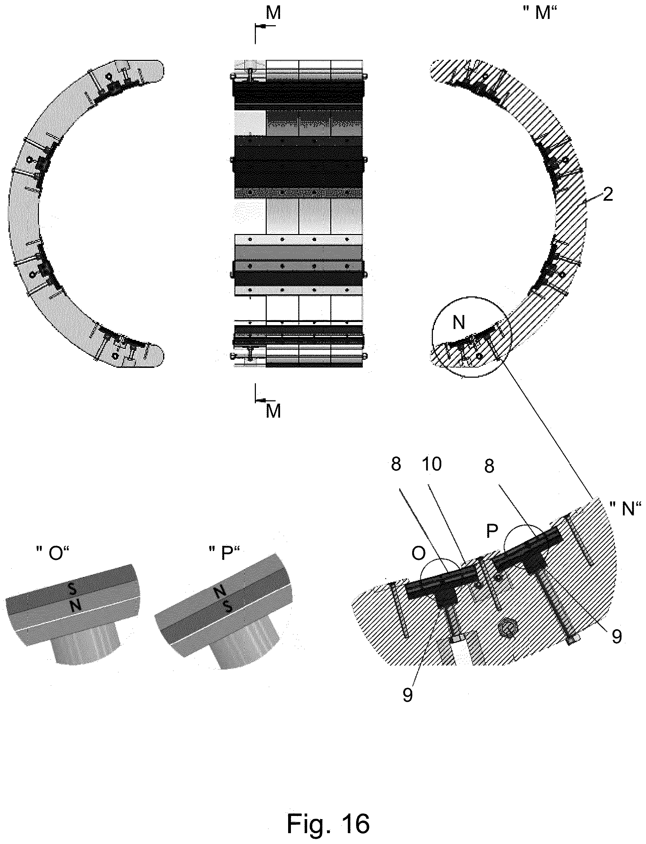

Fig. 12 shows sections I₁-I₁ and I₂-I₂ demonstrating examples of positions of the permanent magnets 7 in each of the two discs of the rotor 1 relative to the permanent magnets 8 of the stator 2, together with enlarged section J. The permanent magnets 8 of the stator 2 are arranged in pairs with the sequence of poles S and N in the direction of the rotation of the rotor, and like in the previous solution, they are connected with a strip 10 of a ferromagnetic material, which strip partly covers them on the side the rotor 1, which is also shown in Fig.13 together with enlarged section J.

In all of the embodiments presented, the increase of the torque generated by the motor revealed in the description can be accomplished by:
- increasing the number of the permanent magnets 7 of the rotor 1;
- increasing the diameter of the rotor 1 and increasing the number of the permanent magnets 7 of the rotor 1 as well as increasing the size of the crescents of the stator 2 and the number of the permanent magnets 8 of the stator 2 along with the strips 10 made of a ferromagnetic material.
- application of stronger permanent magnets 7 of the rotor 1 and permanent magnets 8 of the stator 2.

## Claims

1. A motor comprising a rotor **(1),** wherein:
• the rotor **(1)** comprises at least two discs made of a diamagnetic material and mounted on a drive shaft **(16),**
• the motor further comprises permanent magnets **(7)** embedded in sockets in each of the at least two discs, wherein the poles of same polarity N or S of the permanent magnets **(7)** are located on the outer circumference of the rotor, so that the successive poles of the permanent magnets **(7)** of the rotor **(1)** have the same polarity,
• and wherein the permanent magnets **(7)** in each of the at least two discs are arranged successively and shifted by a certain angle in the circumferential direction from the permanent magnets in the other disc or discs,
• the motor further comprising a movable stator **(2),**
• the movable stator **(2)** comprises a stationary frame **(3)** and two crescents that are half-ring shaped and radially surround the rotor **(1)** and are mounted to the stationary frame **(3)** by means of a pendulous connection **(13),**
• the crescents are controlled by means of linear actuators **(5)** attached to the frame **(3),** the linear actuators **(5)** being supplied with electric current, so that the crescents of the stator **(2)** are positioned closer to or further away from the rotor **(1)** by means of the linear actuators **(3),**
• wherein the frame **(3)** of the motor has a spacer beam **(6)** for positioning the crescents of the stator **(2)** and preventing them from coming too close to the rotor,
• the movable stator **(2)** further comprises permanent magnets **(8)** embedded in sockets made of a diamagnetic material inside the crescents, in such manner that pairs of permanent magnets **(8)** of alternating polarisation are arranged in the inner circumference of the stator, the distance between each permanent magnet **(8)** in the pair of permanent magnets **(8)** being placed at a distance in the circumferential direction, preferably 17 mm, that is significatively smaller than the distance, preferably 165 mm, between a pair of permanent magnets **(8)** and a circumferentially adjacent pair of permanent magnets **(8),**
• wherein the sockets located in the rotor **(1)** and the stator **(2)** respectively comprise ferromagnetic cores **(9),**
• wherein the successive permanent magnets **(8)** of the stator **(2)** are partially covered with a strip **(10)** of a ferromagnetic material on the side of the rotor.

## Patentansprüche

1. Ein Motor mit einem Rotor **(1),** wobei:
• der Rotor **(1)** aus mindestens zwei Scheiben aus diamagnetischem Material besteht, die auf der Antriebswelle **(16)** montiert sind,
• der Motor ferner aus Dauermagneten **(7)** besteht, die in Steckplätzen in jeder der mindestens zwei Scheiben befestigt sind, wobei die Pole mit der gleichen N- oder S-Polarität der Dauermagnete **(7)** am äußeren Umfang des Rotors angeordnet sind, so dass die aufeinanderfolgenden Pole der Dauermagnete **(7)** des Rotors **(1)** die gleiche Polarität aufweisen,
• und wobei die Dauermagnete **(7)** in jeder der mindestens zwei Scheiben nacheinander positioniert und um einen bestimmten Winkel in der Umfangsrichtung gegenüber den Dauermagneten auf der zweiten Scheibe oder den weiteren Scheiben verschoben sind,
• der Motor ferner aus einem beweglichen Stator **(2)** besteht,
• der bewegliche Stator **(2)** aus einem stationären Rahmen **(3)** und zwei Halbmonden in Form eines Halbrings besteht, die den Rotor **(1)** radial umgeben und mittels einer Pendelverbindung **(13)** an dem stationären Rahmen **(3)** befestigt sind,
• die Halbmonde durch am Rahmen **(3)** befestigte Linearaktuatoren **(5)** gesteuert werden, wobei die Linearaktuatoren **(5)** elektrisch angetrieben werden, so dass die Halbmonde des Stators **(2)** mittels der Linearaktuatoren **(3)** näher oder weiter vom Rotor **(1)** positioniert werden,
• wobei der Rahmen **(3)** des Motors einen Abstandshalter **(6)** aufweist, um Halbmonde des Stators **(2)** zu positionieren und zu verhindern, dass sie zu nahe an den Rotor herankommen,
• der bewegliche Stator **(2)** ferner aus Dauermagneten **(8)** besteht, die in Steckplätzen aus diamagnetischem Material im Inneren des Halbmondes so angeordnet sind, dass Paare der Dauermagnete **(8)** mit variabler Polarität am Innenumfang des Stators angeordnet sind, wobei der Abstand zwischen jedem Dauermagneten **(8)** in dem Paar der Dauermagnete **(8),** die in einem Abstand in der Umfangsrichtung angeordnet sind, vorzugsweise **17** mm beträgt und deutlich geringer ist als der Abstand von vorzugsweise 165 mm zwischen dem Paar der Dauermagnete **(8)** und dem in Umfangsrichtung benachbarten Paar der Dauermagnete **(8),**
• wobei die Steckplätze im Rotor **(1)** bzw. im Stator **(2)** ferromagnetische Kerne **(9)** aufweisen,
• wobei die nachfolgenden Dauermagnete **(8)** des Stators **(2)** teilweise von einem Streifen **(10)** aus ferromagnetischem Material auf der Seite des Rotors bedeckt sind.

## Revendications

1. Un moteur comprenant un rotor **(1)** où:
• le rotor **(1)** se compose d'au moins deux disques en matériau diamagnétique fixés à l'arbre de transmission **(16),**
• le moteur se compose aussi d'aimants **(7)** enserrés dans des embases dans chacun d'au moins deux disques, les pôles de la même polarité - N ou S - des aimants **(7)** se trouvant au long du périmètre extérieur du rotor de façon à ce que les pôles successifs des aimants **(7)** du rotor **(1)** aient une polarité identique,
• et où les aimants **(7)** dans chacun d'au moins deux disques sont répartis séquentiellement et décalés d'un certain angle dans le sens circonférentiel des aimants au niveau du deuxième disque ou disques,
• le moteur comprend aussi un stator mobile **(2),**
• le stator mobile **(2)** se compose d'un cadre fixe **(3)** et de deux croissants sous forme de demi-anneaux entourant radialement le rotor **(1)** et fixés au cadre fixe **(3)** à travers d'une navette **(13),**
• les croissants sont commandés à l'aide de servos linéaires **(5)** fixés au cadre **(3),** les servos linéaires **(5)** étant alimentés en électricité de façon à ce que les croissants du stator **(2)** soient placés plus près ou plus loin du rotor **(1)** par les servos linéaires **(3),**
• où le cadre **(3)** du moteur est doté d'une barre d'espacement **(6)** qui sert à positionner les croissants du stator **(2)** et les empêcher de s'approcher trop du rotor,
• le stator mobile **(2)** comprend aussi des aimants **(8)** enserrés dans des embases en matériau diamagnétique au fond d'un croissant de façon à ce que les paires d'aimants **(8)** de la polarité différente soient distribuées au long du périmètre interne du stator, compte tenu d'une distance entre les aimants **(8)** formant une paire d'aimants **(8)** situés l'un de l'autre dans le sens circonférentiel à une distance de **17** mm de préférence, qui est considérablement inférieure à la distance, de 165 mm de préférence, entre la paire d'aimants **(8)** et une paire d'aimants adjacente dans le sens circonférentiel **(8),**
• où les embases situées respectivement dans le rotor **(1)** et stator **(2)** comprennent de noyaux ferromagnétiques **(9),**
• les aimants suivants **(8)** du stator **(2)** étant partiellement couverts d'une bande **(10)** en matériau ferromagnétique sur le côté du rotor.
